(19) Europäisches Patentamt
European Patent Office
Office européen des brevets

(11) **EP 1 688 274 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(51) Int Cl.:
*B60C 9/20* (2006.01)   *B60C 9/00* (2006.01)

(21) Anmeldenummer: **06100123.6**

(22) Anmeldetag: **06.01.2006**

(54) **Fahrzeugluftreifen mit schnittgeschütztem Gürtel**

Pneumatic vehicle tyre with cut protected belt

Pneumatique pour véhicules avec une couche de sommet protegée contre les coupures

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **03.02.2005 DE 102005004968**

(43) Veröffentlichungstag der Anmeldung:
**09.08.2006 Patentblatt 2006/32**

(73) Patentinhaber: **Continental Aktiengesellschaft 30165 Hannover (DE)**

(72) Erfinder:
• **Peters, Klaus**
  **31303, Burgdorf (DE)**
• **Weber, Christian**
  **30826, Garbsen (DE)**
• **Reese, Wolfgang**
  **31228, Peine (DE)**
• **Speckhals, Ulrich**
  **30177, Hanover (DE)**

(56) Entgegenhaltungen:
**EP-A- 0 399 795      DE-A1- 2 558 154**
**US-A- 2 786 507**

• **PATENT ABSTRACTS OF JAPAN Bd. 015, Nr. 134 (M-1099), 3. April 1991 (1991-04-03) & JP 03 016806 A (BRIDGESTONE CORP), 24. Januar 1991 (1991-01-24)**

**Beschreibung**

Die Erfindung betrifft einen Fahrzeugluftreifen mit einer Karkasse und mit einem radial außerhalb der Karkasse angeordneten Gürtel, der mit einer aus einer Vielzahl parallel ausgerichteter in Kautschuk- oder Gummimaterial eingebetteten nebeneinander angeordneten Festigkeitsträgern ausgebildeten Gürtellage mit einer Erstreckung der Gürtellage in axialer Richtung des Fahrzeugluftreifens über eine Breite B ausgebildet ist.

Ein solcher, mit den Merkmalen des Oberbegriffs des Anspruchs 1 korrespondierender Reifen ist beispielsweise aus der EP-A1-0 399 795 bekannt.

Bei schlechten Straßenbedingungen, z.B. auf Schotterpisten oder in Steinbrüchen können Steine die äußerste Gürtellage von Nutzfahrzeugluftreifen durchbrechen und die darunter liegenden tragenden Gürtellagen beschädigen. Durch diese Beschädigung kann dann aufgrund von eintretender Luft und Wasser in den Gürtel der Gürtel ausfallen.

Um diesen Effekten entgegenzuwirken, werden solche Fahrzeugluftreifen üblicherweise mit einem Gürtel ausgebildet, dessen radial äußere Gürtellage mit Festigkeitsträgern aus hochelastischem Stahlkord und mit relativ großen Außendurchmessern der Stahlkorde ausgebildet ist. Auch wenn hierdurch die Bruchgefahr des Gürtels durch eindringende Steine reduziert wird, ermöglichen die eindringenden Steine weiterhin, dass Stahlkorde der Gürtellagen beschädigt und Wasser und Luft leicht bis zum beschädigten Stahlkord vordringt und an diesem entlang weiterwandert. Dies ermöglicht die Bildung von sich ausbreitendem Rost entlang der Korde und auch zu den unteren Gürtellagen und den hierdurch bedingten Ausfall des Reifens.

Der Erfindung liegt daher die Aufgabe zugrunde, einen Fahrzeugluftreifen mit verbesserter Gürtelhaltbarkeit zu schaffen.

Erfindungsgemäß wird die Aufgabe durch die Ausbildung eines Fahrzeugluftreifens mit einer Karkasse und mit einem radial außerhalb der Karkasse angeordneten Gürtel, der mit einer aus einer Vielzahl parallel ausgerichteter in Kautschuk- oder Gummimaterial eingebetteten nebeneinander angeordneten Festigkeitsträgern ausgebildeten Gürtellage mit einer Erstreckung der Gürtellage in axialer Richtung des Fahrzeugluftreifens über eine Breite B ausgebildet ist, gemäß den Merkmalen von Anspruch 1 gelöst, wobei die Festigkeitsträger Korde mit einem Außendurchmesser d sind mit Filamenten, deren Mittelpunkte in Querschnittsebenen senkrecht zur Cordlängsrichtung auf einer abgerundeten oder polygonalen geschlossenen Hüllkurve liegen, wobei die innerhalb der Hüllkurve zwischen den Filamenten befindlichen Hohlräume zu wenigstens 95% mit Kautschuk- oder Gummimaterial angefüllt sind, und mit einer Korddichte D der Gürtellage in Breitenrichtung der Gürtellage, für die gilt:

$$D = (Z \times d)/B \geq 0{,}7,$$

wobei B die Breite der Gürtellage in axialer Richtung des Reifens, Z die Anzahl der Korde über die Breite der Gürtellage und d der Außendurchmesser der Korde der Gürtellage ist.

Die hierdurch erzielte Kombination aus sehr hoher Korddichte der Gürtellagen und hoher Durchdringung des Kords der Gürtellagen mit Kautschuk- oder mit Gummimaterial bewirkt erschwertes Eindringen von Steinen in die Gürtellagen und somit reduzierte Beschädigungsgefahr der Korde sowie hierdurch eine reduzierte Gefahr des Eindringens von Luft und Wasser bis an die Korde bei zusätzlicher Erschwernis des Eindringens von Luft und Wasser bis in die Korde und der Wandereffekte von eingedrungener Luft und Wasser entlang der Korde. Somit wird sowohl die Gefahr des Eindringens von Luft und Wasser bis an die Korde als auch - soweit dennoch Luft und Wasser eindringen sollte - die hierdurch bedingten Oxidationseffekte am Kord reduziert. Durch diese Kombination kann somit die Gefahr von Gürtelausfällen besonders in sogenannten OFF-Einsätzen auf schlechten Straßenuntergründen reduziert werden.

Besonders vorteilhaft ist die Ausbildung eines Fahrzeugluftreifens gemäß den Merkmalen von Anspruch 2, wobei die radial am weitesten außen liegende Gürtellage eines aus mehreren Gürtellagen ausgebildeten Gürtels derart ausgebildet ist. Hierdurch kann durch die besondere Ausbildung der äußeren Gürtellage ein Eindringen von Luft und Wasser in die darunter befindlichen Gürtellagen reduziert und die hierdurch bedingten Oxidationsrisiken für die Korde auch der unteren Gürtellagen minimiert werden.

Besonders vorteilhaft ist die Ausbildung eines Fahrzeugluftreifens gemäß den Merkmalen von Anspruch 3, wobei zusätzlich zu der radial am weitesten außen liegende Gürtellage auch die radial am zweit weitesten außen liegende Gürtellage eines aus wenigstens drei Gürtellagen ausgebildeten Gürtels derart ausgebildet ist.. Hierdurch kann durch die besondere Ausbildung der äußeren beiden Gürtellagen ein Eindringen von Luft und Wasser in die darunter befindlichen Gürtellagen reduziert und die hierdurch bedingten Oxidationsrisiken für die Korde auch der unteren Gürtellagen minimiert werden.

Die Ausbildung gemäß den Merkmalen von Anspruch 4, wobei radial innerhalb der Hüllkurve im Kord ein oder mehrere weitere Filamente angeordnet sind, stellt eine besonders vorteilhafte Ausführungsform dar.

Bevorzugt ist die Ausbildung gemäß den Merkmalen von Anspruch 5, wobei die Filamente aus Stahl ausgebildet sind.

Besonders vorteilhaft ist die Ausbildung gemäß den Merkmalen von Anspruch 6, wobei die Hüllkurve kreisförmig, oval oder elliptisch ist.

Besonders vorteilhaft ist die Ausbildung gemäß den Merkmalen von Anspruch 7, wobei die Hüllkurve dreieckig, viereckig, fünfeckig, sechseckig, achteckig oder zwölfeckig ist.

Besonders vorteilhaft ist die Ausbildung gemäß den Merkmalen von Anspruch 8, wobei der Fahrzeugluftreifen ein Nutzfahrzeugluftreifen insbesondere mit vier Gürtellagen ist.

Die Erfindung ist im Folgenden an Hand der in den Fig.1 bis Fig.3 schematisch dargestellten Ausführungsbeispiele eines Nutzfahrzeugluftreifens mit vier Gürtellagen näher erläutert. Darin zeigen

Fig. 1    Querschnittsdarstellung eines Fahrzeugluftreifens mit vier Gürtellagen,

Fig. 2    Darstellung der radial äußersten Gürtellage zur Erläuterung der Korddichte der Anordnung,

Fig. 3    Querschnittsdarstellung eines Kordes der radial äußersten Gürtellage.

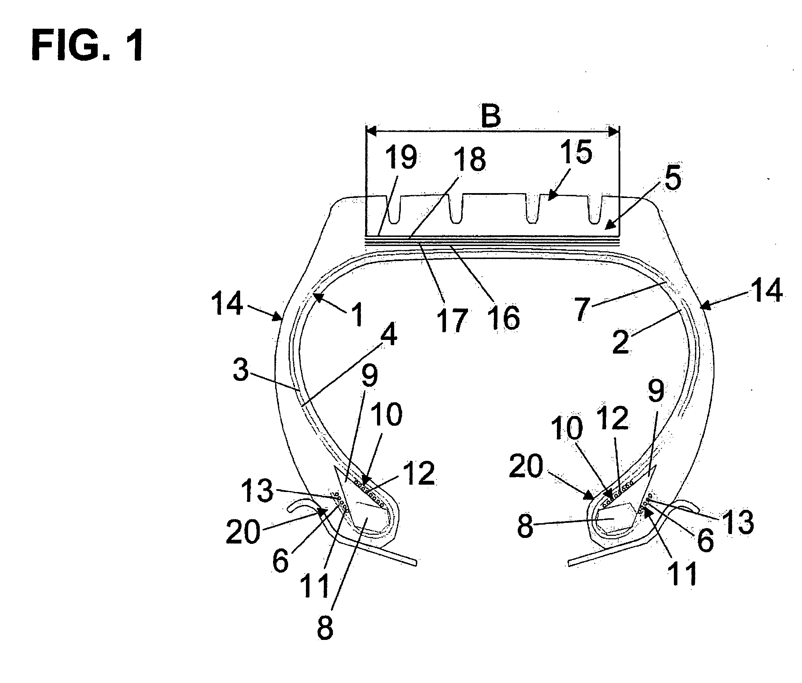

Fig. 1 zeigt einen Nutzfahrzeugluftreifen mit einem Laufstreifen 15 und mit zwei Reifenseitenwänden 14, die sich jeweils ausgehend vom Laufstreifen 15 in bekannter Weise nach radial innen erstrecken. Der Nutzfahrzeugluftreifen ist in bekannter, herkömmlicher Weise mit jeweils einem am radial inneren Ende der Reifenseitenwände über den Umfang des Reifens erstreckten Reifenwulst 20 mit darin konzentrisch zum Fahrzeufluftreifen ausgebildetem ringförmigen Wulstkern 8 ausgebildet. Der Nutzfahrzeugluftreifen ist in bekannter, herkömmlicher Weise mit einer Innenschicht 2 aus relativ luftundurchlässigem Gummimaterial bekannter Art, die sich axial von Wulstkern 8 zu Wulstkern 8 und in Umfangsrichtung über den gesamten Umfang des Reifens erstreckt, aufgebaut. Radial über die Innenschicht 2 ist eine Karkasse 1 aus einer oder aus mehreren - beispielsweise aus zwei - Karkassenlagen 3 und 4 radialer, bekannter Bauart aufgebaut. Die Karkassenlagen 3 und 4 erstrecken sich über den gesamten Umfang des Reifens und in axialer Richtung mit einem Hauptteil 7 der Karkasse von dem einen Wulstkern 8 zu dem anderen Wulstkern 8, wo sie sich in bekannter 2/0-Anordnung von axial innerhalb des Wulstkerns 8 radial unterhalb des Wulstkerns 8 nach axial außen erstrecken und axial außerhalb der Wulstkerne 8 jeweils um den Wulstkern 8 nach radial oben hin umgeschlagen sind, so dass die Karkasslagen 3 und 4 axial außerhalb der Wulstkerne 8 jeweils einen Umschlag 6 der Karkasse bilden. Der Umschlag 6 verläuft parallel zum Wulstkern 8 und zum radial oberhalb des Wulstkerns 8 ausgebildeten Kemprofil 9 und endet im radialen Erstreckungsbereich des Kemprofils 9.

Die Karkassenlagen 3 und 4 sind jeweils aus parallelen in Kautschuk eingebetteten metallischen Festigkeitsträgern - beispielsweise aus Stahl - ausgebildet

Zwischen Karkasse 1 und dem profilierten Laufstreifen 15 ist in bekannter Weise ein Gürtel 5 mit vier von radial innen nach radial außen aufeinander aufgebauten Gürtellagen 16, 17, 18, 19 ausgebildet, die sich jeweils über den Umfang des Reifens und in axialer Richtung von Reifenschulter zu Reifenschulter erstrecken. Die Gürtellagen 16, 17, 18, 19 sind jeweils aus parallelen in Kautschuk eingebetteten metallischen Festigkeitsträgern 21,22,23,24- beispielsweise aus Stahl - ausgebildet. Die Festigkeitsträger 21 der ersten Gürtellage 16 sind in in der Äquatorebene unter einem spitzen Winkel von kleiner oder gleich 60° - beispielsweise von 50° - zur Umfangsrichtung verlaufend ausgebildet. Die Festigkeitsträger 22 der zweiten Gürtellage 17 sind in in der Äquatorebene unter einem spitzen Winkel von kleiner oder gleich 60° - beispielsweise von 20° - zur Umfangsrichtung verlaufend ausgebildet. Die Festigkeitsträger 23 der dritten Gürtellage 18 sind in in der Äquatorebene unter einem spitzen Winkel von kleiner oder gleich 60° - beispielsweise von 20° - zur Umfangsrichtung verlaufend ausgebildet. Die Festigkeitsträger 24 der vierten, radial am weitesten außen liegenden Gürtellage 19 sind in in der Äquatorebene unter einem spitzen Winkel von kleiner oder gleich 60° - beispielsweise von 20° - zur Umfangsrichtung verlaufend ausgebildet.

Axial zwischen Hauptteil 7 der Karkasse und Wulstkern 8 mit Kernprofil 9 ist ein erster Wulstverstärkungsstreifen 10 bekannter Art mit parallelen in Umfangsrichtung ausgerichteten in Kautschuk eingebetteten, metallischen Festigkeitsträgern 12 ausgebildet. Der Wulstverstärkungsstreifen 12 erstreckt sich über den gesamten Umfang des Reifens. Die Festigkeitsträger 12 sind jeweils beispielsweise aus einem Monofilament oder aus einem Multifilament aufgebaut. Beispielsweise sind die Festigkeitsträger jeweils ein Stahlcord..

Axial zwischen Umschlag 8 der Karkasse und Wulstkern 8 mit Kemprofil 9 ist ein zweiter Wulstverstärkungsstreifen 11 bekannter Art ausgebildet, der sich über den gesamten Umfang des Reifens erstreckt. Der Wulstverstärkungsstreifen 11 ist in bekannter Weise mit parallelen in Umfangsrichtung ausgerichteten in Kautschuk eingebetteten, metallischen Festigkeitsträgern 13 ausgebildet. Die Festigkeitsträger 13 sind jeweils in Kautschuk eingebettete, metallische Festigkeitsträger, die beispielsweise aus einem Monofilament oder aus einem Multifilament aufgebaut sind. Beispielsweise sind die Festigkeitsträger 13 jeweils ein Stahlcord.

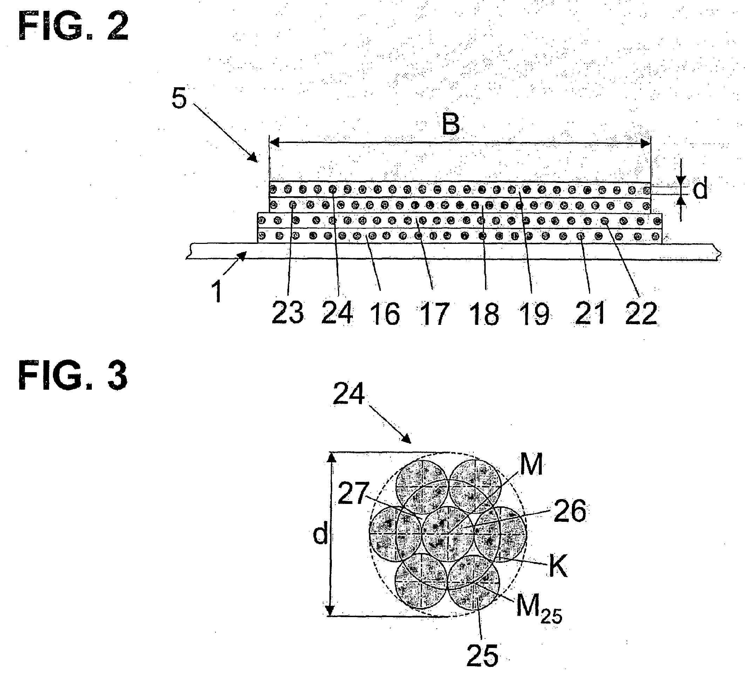

Wie in Fig. 1 und in Fig. 2 zu erkennen ist erstreckt sich die radial äußerste Gürtellage 19 in axialer Richtung des Fahrzeugluftreifens über eine Breite B. Die anderen Gürtellagen 16, 17 und 18 sind - wie in Fig.1 dargestellt - in einer Ausführung in ihrer axialen Erstreckung ebenfalls über die Breite B der radial äußeren Gürtellage 19 ausgebildet. In einer in Fig.2 dargestellten Ausführung, ist die erste Gürtellagen 16 mit größerer Erstreckung in axialer Richtung des Fahrzeugluftreifens ausgebildet als die Erstreckungsbreite B der radial äußersten Gürtellage 19. In einer, nicht dargestellten Ausführung, ist die erste Gürtellagen 16 mit kleinerer Erstreckung in axialer Richtung des Fahrzeugluftreifens ausgebildet als die Erstreckungsbreite B der radial äußersten Gürtellage 19. In einer in Fig. 2 dargestellten Ausführung ist die zweite Gürtellagen 17 mit größerer Erstreckung in axialer

Richtung des Fahrzeugluftreifens ausgebildet als die Erstreckungsbreite B der radial äußersten Gürtellage 19. In einer, nicht dargestellten Ausführung, ist die zweite Gürtellagen 17 mit kleinerer Erstreckung in axialer Richtung des Fahrzeugluftreifens ausgebildet als die Erstrekkungsbreite B der radial äußersten Gürtellage 19. In einer, nicht dargestellten Ausführung, ist die dritte Gürtellagen 18 mit größerer Erstreckung in axialer Richtung des Fahrzeugluftreifens ausgebildet als die Erstrekkungsbreite B der radial äußersten Gürtellage 19. In einer, nicht dargestellten Ausführung, ist die dritte Gürtellagen 18 mit kleinerer Erstreckung in axialer Richtung des Fahrzeugluftreifens ausgebildet als die Erstrekkungsbreite B der radial äußersten Gürtellage 19.

**[0022]** Die Festigkeitsträger 24 sind in ihrem Querschnitt senkrecht zu ihrer Längserstreckungsrichtung jeweils - wie in Fig. 2 und Fig. 3 zu erkennen ist - mit einem Außendurchmesser d ausgebildet. Die Gürtellage 19 weist über ihre Breite B eine Korddichte D auf mit $D \geq 0{,}7$. Die Korddichte D wird aus der Breite B der Gürtellage 19 in axialer Richtung des Reifens, aus der Anzahl Z der Korde über die Breite der Gürtellage 19 und aus dem Außendurchmesser d der Korde der Gürtellage 19 gebildet,

wobei für die Korddichte D gilt: $D = (Z \times d)/B$,

**[0023]** Die Korddichte der radial inneren Gürtellagen 16, 17 und 18 ist in einer Ausführung kleiner als die Korddichte der radial äußeren Gürtellage.

**[0024]** In einer anderen Ausführung ist die Korddichte der dritten Gürtellage 18 gleich groß wie die Korddichte der radial äußeren Gürtellage 19 und größer als die Korddichte der radial inneren Gürtellagen 16 und 17. In einer anderen Ausführung ist die Korddichte der dritten Gürtellage 18 und die Korddichte der zweiten Gürtellage 17 jeweils gleich groß wie die Korddichte der radial äußeren Gürtellage 19 und größer als die Korddichte der radial inneren Gürtellage 16. In einer anderen Ausführung ist die Korddichte der dritten Gürtellage 18, die Korddichte der zweiten Gürtellage 17 und die Korddichte der ersten Gürtellage 16 jeweils gleich groß wie die Korddichte der radial äußeren Gürtellage 19.

**[0025]** In einer anderen Ausführung ist die Korddichte der zweiten Gürtellage 17 und die der dritten Gürtellage 18 größer als die der vierten Gürtellage 19 und die der ersten Gürtellage 16.

**[0026]** Die Korde 24 sind in ihrenen Querschnitten senkrecht zu ihrer Längserstreckungsrichtung - wie im Ausführungsbeispiel von Fig. 3 zu erkennen ist - aus mehreren - beispielsweise aus sechs - Filamenten 25 aufgebaut, deren Mittelpunkte $M_{25}$ auf einer Kreislinie K um einen Mittelpunkt M liegen. Im dargestellten Ausführungsbeispiel bilden die Filamente 25 eine äußere Umhüllung eines weiteren zentralen, konzentrisch zum Mittelpunkt M des Kreises K ausgebildeten Filamentes 26 des Kordes 24. Längs der Erstreckung des Kordes 24 sind die Mantelfilamente 25 jeweils schraubenförmig um das zentrale Filament 26 gewunden. Die Filamente 25 stehen im dargestellten Ausführungsbeispiel jeweils in Berührkontakt zu den auf der Kreislinie K benachbarten Filamenten 25 sowie zum zentralen Filament 26.

**[0027]** Innerhalb des Kreises K sind Hohlräume 27 zwischen den Filamenten 26 und 25 gebildet.. Im ausvulkanisierten Zustand des Fahrzeugluftreifens sind die Hohlräume 27 über die gesamte Längserstreckung des Kords 24 hinweg in jedem Querschnitt senkrecht zur Längserstreckung des Kordes 24 jeweils zu wenigstens 95% - beispielsweise zu 98% - mit Gummi angefüllt.

**[0028]** Bereits vor der Vulkanisation des Fahrzeugluftreifens sind die Höhlräume in einer Ausführung hierzu zu wenigstens 95% - beispielsweise zu 98% - mit Kautschuk angefüllt.

**[0029]** In Fig.3 ist zwar ein Stahlkord mit sechs Mantelfilamenten dargestellt. Es ist in alternativer Ausführung auch ein Stahlkord einsetzbar, der weniger - beispielsweise vier oder fünf- Mantelfilamente aufweist. Es ist in alternativer Ausführung auch ein Stahlkord einsetzbar, der mehr - beispielsweise acht, neun oder zwölf Mantelfilamente aufweist. Derartige Stahlkorde sind beispielsweise aus der DE69421090T2 bekannt.

**[0030]** In Fig.3 ist zwar ein Stahlkord mit Mantelfilamenten, deren Mittelpunkte auf einer Kreislinie angeordnet sind, dargestellt. Es ist in alternativer Ausführung auch ein Stahlkord einsetzbar, dessen Mantelfilamente auf einer anderen abgerundeten - beispielsweise auf einer - elliptischen oder einer ovalen - oder auf einer polygonalen - beispielsweise dreieckigen, viereckigen, fünfeckigen, sechseckigen, achteckigen oder zwölfeckigen - geschlossenen Linie liegen.

**[0031]** In Fig. 3 ist lediglich ein Stahlkord mit einem einzigen zentralen Filament 26 dargestellt. In alternativer Ausführung ist auch es auch möglich, innerhalb der Hüllkurve mehrere zentrale Filamente auszubilden.

Bezugszeichenliste

(Teil der Beschreibung)

**[0032]**

| | |
|---|---|
| 1 | Karkasse |
| 2 | Innenschicht |
| 3 | Erste Karkassenlage |
| 4 | Zweite Karkassenlage |
| 5 | Gürtel |
| 6 | Umschlag |
| 7 | Hauptteil der Karkasse |
| 8 | Wulstkern |
| 9 | Kemprofil |
| 10 | Wulstverstärkungsstreifen |
| 11 | Wulstverstärkungsstreifen |
| 12 | Festigkeitsträger |
| 13 | Festigkeitsträger |
| 14 | Reifenseitenwand |
| 15 | Laufstreifen |
| 16 | Gürtellage |
| 17 | Gürtellage |

| 18 | Gürtellage |
| 19 | Gürtellage |
| 20 | Reifenwulst |
| 21 | Festigkeitsträger |
| 22 | Festigkeitsträger |
| 23 | Festigkeitsträger |
| 24 | Festigkeitsträger |
| 25 | Filament |
| 26 | Filament |
| 27 | Hohlraum |

**Patentansprüche**

1. Fahrzeugluftreifen mit einer Karkasse (1) und mit einem radial außerhalb der Karkasse (1) angeordneten Gürtel (5), der mit wenigstens einer aus einer Vielzahl parallel ausgerichteter in Kautschuk- oder Gummimaterial eingebetteten nebeneinander angeordneten Festigkeitsträgern (24) ausgebildeten Gürtellage mit einer Erstreckung der Gürtellage in axialer Richtung des Fahrzeugluftreifens über eine Breite B ausgebildet ist,
   wobei die Festigkeitsträger (24) Korde mit einem Außendurchmesser d sind mit Filamenten (25), deren Mittelpunkte in Querschnittsebenen senkrecht zur Kordlängsrichtung auf einer abgerundeten oder polygonalen geschlossenen Hüllkurve liegen, und mit einer Korddichte D der Gürtellage in Breitenrichtung der Gürtellage, für die gilt:

$$D = (Z \times d)/B \geq 0{,}7,$$

   wobei B die Breite der Gürtellage in axialer Richtung des Reifens, Z die Anzahl der Korde (24) über die Breite der Gürtellage und d der Außendurchmesser der Korde (24) der Gürtellage ist, **gekennzeichnet dadurch, dass** die innerhalb der Hüllkurve zwischen den Filamenten (25) befindlichen Hohlräume (27) zu wenigstens 95% mit Kautschuk- oder Gummimaterial angefüllt sind.

2. Fahrzeugluftreifen gemäß den Merkmalen von Anspruch 1,
   wobei die radial am weitesten außen liegende Gürtellage (19) eines aus mehreren Gürtellagen (16,17,18,19) ausgebildeten Gürtels (5) derart ausgebildet ist.

3. Fahrzeugluftreifen gemäß den Merkmalen von Anspruch 2,
   wobei zusätzlich die radial am zweit weitesten außen liegende Gürtellage (18) eines aus wenigstens drei Gürtellagen (16,17,18,19) ausgebildeten Gürtels (5) derart ausgebildet ist:

4. Fahrzeugluftreifen gemäß den Merkmalen von Anspruch 1,2 oder 3,
   wobei radial innerhalb der Hüllkurve im Kord (24) ein oder mehrere weitere Filamente (26) angeordnet sind.

5. Fahrzeugluftreifen gemäß den Merkmalen von einem oder mehreren der vorangegangenen Ansprüche,
   wobei die Filamente (24) aus Stahl ausgebildet sind.

6. Fahrzeugluftreifen gemäß den Merkmalen von einem oder mehreren der vorangegangenen Ansprüche,
   wobei die Hüllkurve kreisförmig, oval oder elliptisch ist.

7. Fahrzeugluftreifen gemäß den Merkmalen von einem oder mehreren der Ansprüche 1 bis 6,
   wobei die Hüllkurve dreieckig, viereckig, fünfeckig, sechseckig, achteckig oder zwölfeckig ist.

8. Fahrzeugluftreifen gemäß den Merkmalen von einem oder mehreren der vorangegangenen Ansprüche,
   wobei der Fahrzeugluftreifen ein Nutzfahrzeugluftreiibn insbesondere mit vier Gürtellagen (16,17,18,19) ist.

**Claims**

1. Pneumatic vehicle tyre comprising a casing (1) and a breaker belt (5), which is arranged radially outside the casing (1) and is formed with at least one belt ply that is formed by a multiplicity of reinforcing elements (24) that are aligned parallel, are embedded in unvulcanized or vulcanized rubber material and are arranged next to one another, with the belt ply extending in the axial direction of the pneumatic vehicle tyre over a width B,
   the reinforcing elements (24) being cords with an outside diameter d, comprising filaments (25) whose centre points in cross-sectional planes perpendicular to the longitudinal direction of the cords lie on a rounded or polygonal closed enveloping curve, and with a cord density D of the belt ply in the direction of the width of the belt ply for which:

$$D = (Z \times d)/B \geq 0.7,$$

   where B is the width of the belt ply in the axial direction of the tyre, Z is the number of cords (24) over the width of the belt ply and d is the outside diameter of the cords (24) of the belt ply, **characterized in that** the cavities (27) located between the filaments (25) within the enveloping curve are filled to at least 95% with unvulcanized or vulcanized rubber material.

2. Pneumatic vehicle tyre according to the features of Claim 1, the radially outermost belt ply (19) of a breaker belt (5) that is formed by a number of belt plies (16, 17, 18, 19) being formed in such a way.

3. Pneumatic vehicle tyre according to the features of Claim 2, the radially second outermost belt ply (18) of a breaker belt (5) formed by at least three belt plies (16, 17, 18, 19) additionally being formed in such a way.

4. Pneumatic vehicle tyre according to the features of Claim 1, 2 or 3, one or more further filaments (26) being arranged in the cord (24) radially within the enveloping curve.

5. Pneumatic vehicle tyre according to the features of one or more of the preceding claims, the filaments (24) being made of steel.

6. Pneumatic vehicle tyre according to the features of one or more of the preceding claims, the enveloping curve being circular, oval or elliptical.

7. Pneumatic vehicle tyre according to the features of one or more of Claims 1 to 6, the enveloping curve being three-cornered, four-cornered, five-cornered, six-cornered, eight-cornered or twelve-cornered.

8. Pneumatic vehicle tyre according to the features of one or more of the preceding claims, the pneumatic vehicle tyre being a tyre of a commercial vehicle, in particular comprising four belt plies (16, 17, 18, 19).

**Revendications**

1. Pneumatique pour véhicule avec une carcasse (1) et avec une nappe de sommet (5) disposée radialement à l'extérieur de la carcasse (1), qui est formée avec au moins une couche de nappe de sommet formée d'une pluralité d'éléments de résistance (24) noyés dans une matière de caoutchouc ou de gomme, orientés parallèlement les uns aux autres et disposés les uns à côté des autres, avec une extension de la couche de nappe de sommet sur une largeur B en direction axiale du pneumatique pour véhicule, dans lequel les éléments de résistance (24) sont des cordes de diamètre extérieur d avec des filaments (25), dont les centres sont situés sur une courbe enveloppe arrondie ou polygonale fermée dans des plans transversaux perpendiculaires à la direction longitudinale des cordes, et avec une densité de cordes D de la couche de nappe de sommet en direction de la largeur de la couche de nappe de sommet pour laquelle on a:

$$D = (Z \times d)/B \geq 0,7,$$

dans laquelle B est la largeur de la couche de nappe de sommet en direction axiale du pneumatique, Z est le nombre des cordes (24) sur la largeur de la couche de nappe de sommet et d est le diamètre extérieur des cordes (24) de la couche de nappe de sommet, **caractérisé en ce que** les espaces creux (27) se trouvant entre les filaments (25) à l'intérieur de la courbe enveloppe sont remplis à au moins 95 % de matière de caoutchouc ou de gomme.

2. Pneumatique pour véhicule selon les caractéristiques de la revendication 1, dans lequel la couche de nappe de sommet (19) située radialement le plus loin vers l'extérieur d'une nappe de sommet (5) constituée de plusieurs couches de nappe de sommet (16, 17, 18, 19) est formée de cette manière.

3. Pneumatique pour véhicule selon les caractéristiques de la revendication 2, dans lequel en outre la couche de nappe de sommet (18) située la deuxième plus loin vers l'extérieur d'une nappe de sommet (5) constituée d'au moins trois couches de nappe de sommet (16, 17, 18, 19) est formée de cette manière.

4. Pneumatique pour véhicule selon les caractéristiques de la revendication 1, 2 ou 3, dans lequel un ou plusieurs autres filaments (26) sont disposés dans la corde (24) à l'intérieur de la courbe enveloppe.

5. Pneumatique pour véhicule selon les caractéristiques d'une ou de plusieurs des revendications précédentes, dans lequel les filaments (24) sont réalisés en acier.

6. Pneumatique pour véhicule selon les caractéristiques d'une ou de plusieurs des revendications précédentes, dans lequel la courbe enveloppe est circulaire, ovale ou elliptique.

7. Pneumatique pour véhicule selon les caractéristiques d'une ou de plusieurs des revendications 1 à 6, dans lequel la courbe enveloppe est triangulaire, quadrangulaire, pentagonale, hexagonale, octogonale ou dodécagonale.

8. Pneumatique pour véhicule selon les caractéristiques d'une ou de plusieurs des revendications précédentes, dans lequel le pneumatique pour véhicule est un pneumatique pour véhicule utilitaire, en particulier avec quatre couches de nappe de sommet (16, 17, 18, 19).

# FIG. 1

EP 1 688 274 B1

# FIG. 2

# FIG. 3

EP 1 688 274 B1

**EP 1 688 274 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0399795 A1

- DE 69421090 T2